# EUROPEAN PATENT SPECIFICATION

(11) **EP 1 226 737 B1**
(45) Date of publication and mention of the grant of the patent: **07.01.2009**
(21) Application number: 00973190.2
(22) Date of filing: 02.11.2000
(51) Int. Cl.: H04Q 11/00, H04B 10/08

(54) **METHOD AND SYSTEM FOR COMMUNICATION PROTECTION**
VERFAHREN UND SYSTEM ZUR KOMMUNIKATIONSSICHERUNG
PROCEDE ET SYSTEME DE SECURISATION DE COMMUNICATION

(30) Priority: 03.11.1999 IL 13272799
(43) Date of publication of application: 31.07.2002
(73) Proprietor: ECI Telecom Ltd., Petach-Tikva 49517 (IL)
(72) Inventor: MARMUR, Oren, 64281 Tel-Aviv (IL)
(74) Representative: Curell Aguilà, Marcelino
(86) International application number: PCT/IL2000/000707
(87) International publication number: WO 2001/033757

(56) References cited:
- EP-A- 0 938 244
- WO-A-97/24822
- LI C -S ET AL: "AUTOMATIC FAULT DETECTION, ISOLATION, AND RECOVERY IN TRANSPARENT ALL-OPTICAL NETWORKS" JOURNAL OF LIGHTWAVE TECHNOLOGY,IEEE. NEW YORK,US, vol. 15, no. 10, 1 October 1997 (1997-10-01), pages 1784-1793, XP000703593 ISSN: 0733-8724

## Description

### Field of the Invention

The present invention relates in general to optical networks, and in particularly to optical telecommunication networks and to methods of using them.

### Background of the Invention

Telecommunication systems comprising a number of optical transmission channels are known in the art. Unfortunately, these systems suffer occasionally from a fault occurring in one of these channels, e.g. due to failing components. Therefore, a protection channel is usually incorporated in such systems, allowing the diversion of transmitted communication to a non-failing channel, the protection channel. Traditionally, monitoring the performance in these telecommunication systems was done while incorporating various alarm conditions. Such alarm conditions alerted a human operator when certain events e.g. a loss of signal or error rates that had exceeded pre-defined thresholds were detected. In response to such an alarm, the operator would manually switch to a redundant path in the network, allowing the communication to continue.

At a later stage, conventional fiber optic fibers have implemented 1:1 redundancy for the optical channels in a network, with a certain amount of automatic switching. In these systems, when a loss of signal (to be referred to hereinafter as "LOS") or alarm indication signal ("AIS") conditions were noted in a channel connecting a first location to a second location, a diversion of the transmission to the available redundant path was made. This diversion enables the transmission of data between these first and second locations to continue.

US 4,646,286 discloses a system wherein a protection switch is effected by detecting a channel failure at receiving end. Thereafter, a protection request is transmitted on the return channel to the transmission end. This request is then used in a controller for the channel to activate a switch to the corresponding protection channel. Similarly, WO 97/24822 discloses the use of distinctive optical signals indicating detection of fault in order to allow a switch to a protection link.

However, since this solution requires doubling both the cabling and the input/output ports as compared with those required to carry traffic, such a solution is quite expensive.

Another solution was described in US 5,479,608 that discloses a~ telecommunication system having 1:N group protection. By this type of solution one redundant channel is allocated to protect a number of operative channels. According to this solution, in response to the detection of an error condition, a request is transmitted to the other side of the system to activate the protection channel.

Chung-Sheng Li "Automatic Fault Detection, Isolation, and Recovery in Transport All-Optical Networks" J. of Lightwave Tech. , IEEE , Vol. 15, 1784-1793, 1997 describes the use a separate supervisory channel using either independent wavelength or a subcarrier channel wherein a pilot tone provides information for fault management.

### Summary of the Invention

It is an object of the present invention to provide an optical system that allows continued transmission of messages in case of a failure in a transmission path by using an alternative transmission path. It is yet another object of the present invention to provide a system that comprises a combination of protection means and means for automatic system shut down.

It is still another object of the present invention to provide method for diverting transmission from a failing transmission path to an alternative protection path.

Other objects of the invention will become apparent as the description of the invention proceeds.

In accordance with the present invention, there is provided in an optical transport network comprising a first optical transmission link and a first optical reception link extending between a first and a second locations and carrying traffic in normal operation mode from the first location to the second location, and a second transmission link and a second reception link adapted to carry traffic diverted from the first optical transmission and reception links in the event of a fault in at least one of the two first optical links, a method for diverting traffic to the second transmission and reception links, which method comprises the steps of:
detecting a fault on a first optical link at the second location;
determining whether a total of the energy received over the first reception optical link at the second location exceeds a pre-defined threshold;
in the case that the total energy thus received does not exceed the pre-defined threshold, diverting the traffic transmission and reception at the second location to the corresponding second links;
detecting a fault on a first optical link at the first location;
determining whether a total of the energy received via the first optical link at the first location exceeds a pre-defined threshold; and
in the case that the total energy thus received does not exceed the pre-defined threshold, diverting the traffic transmission and reception at the first location to the corresponding second links.

In accordance with the present invention there is provided in an optical transport network comprising a plurality of telecommunication channels extending between first and second locations, the channels comprising a plurality of channels for carrying traffic in normal operation mode from the first location to the second location and at least one protection channel for carrying traffic channel in the event of a fault in at least one of the channels carrying traffic in normal operation mode, a method for managing routing of traffic to the protection channel, comprising the steps of:
detecting a fault on at least one of the channels carrying traffic in normal operation mode, at the second location;
switching at the second location the transmission and reception paths associated with said at least one failing channel to the at least one protection channel;
detecting a fault on said at least one channel at the first location; and
switching at the first location the transmission and reception paths associated with said at least one failing channel to the at least one protection channel.

According to an embodiment of the present invention the at least one protection channel is used for protecting one pre-designated channel of the plurality of telecommunication channels.

According to another embodiment of the invention the at least one protection channel is used for protecting a plurality of telecommunication channels.

In accordance with still another embodiment of the invention there is provided in an optical transport network comprising a plurality of telecommunication channels extending between first and second locations, the channels comprising a plurality of channels for carrying traffic from the first location to the second location, at least one protection channel for carrying the traffic of at least one forward channel in the event of fault in said at least one forward channel, a method for allowing continuous operation of non-failing channels provided that the overall transmitted energy in the non-failing channels exceeds a pre-defined threshold.

According to another aspect of the invention, there is provided an optical transport network comprising a plurality of telecommunication channels extending between first and second locations, the channels comprising a plurality of forward channels for carrying traffic in normal operating mode from the first location to the second location, at least one protection channel for carrying the traffic of at least one forward channel in the event of fault in said at least one forward channel, wherein when a failure occurs in one or more of said telecommunication channels, a continued operation of the non-failing telecommunication channels is allowed, provided that the overall transmitted energy in said non-failing telecommunication channels exceeds a pre-defined threshold.

Preferably, the optical transport network of the invention comprises:
a plurality of optical transmitters;
a wave division multiplexer receiving outputs from said plurality of optical transmitters over a plurality of optical channels;
at least one pair of optical links comprising a transmission link and a reception link;
at least one pair of protection links comprising a transmission link and a reception link;
at least one protection channel;
a wave division demultiplexer capable of receiving an input from said division multiplexer over one of said transmission links;
a plurality of optical receivers, each receiving an input from said wave division demultiplexer;
a detection means for detecting a loss of signal in at least one failing channel out of the plurality of optical channels;
a determination means for determining whether the energy of the input received from said division multiplexer exceeds a pre-defined threshold;
a blocking means operative to block all laser beams leaving said wave division multiplexer responsive to a determination of said determination means that the energy thus received does not exceed the pre-defined threshold; and
a protecting means operative to divert traffic from said at least one failing channel to said least one protection channel in the event of fault in said at least one forward channel, provided that the energy of the input received from said division multiplexer exceeds the pre-defined threshold.

According to still another embodiment of the invention, the system further comprises at least one other transmitter and at least one other detector. Operating these other transmitter and detector allows to continuously monitoring the operability of the optical fiber which is not currently being used for the transmission of telecommunication traffic. By this embodiment, the optical fiber that is not used for transmitting traffic, e.g. the fiber assigned for protection purposes, is being monitored either on a continuous basis or according to a pre-determined schedule. Such monitoring enables to detect problems that may prevent the non-used fiber (e.g. the fiber assigned for protection) from functioning properly when required (e.g. when the main optic fiber is damaged and traffic is to be switched to the protection fiber). This way, if that fiber is found to be mal-functioning, it can be timely repaired. According to a further preferred embodiment, once a switch in the traffic transmission takes place to the protection fiber, the mal-functioning main optical fiber, will now be monitored by the at least one other transmitter and at least one other detector, which may be different transmitter and/or detector, or the same ones used when thew protection fiber was monitored. Once this main fiber is repaired, the system can immediately be notified and the traffic may resume its original transmission path (the main optical fiber), switching from the protection fiber (revertive protection).

### Brief Description of the Drawings

The present invention will be understood and appreciated more fully from the following detailed description, taken in conjunction with the drawings in which:
Fig. 1A illustrates a typical configuration of an optical protection module, where Figs. 1B and 1C illustrate a configuration of an input optical switch and an output optical switch, respectively;
Fig. 2 is a flow chart describing a sequence of events occurring when a protection action is required;
Figs. 3A to 3D demonstrate operation of a system according to an embodiment of the present invention while switching from normal operating mode to a protection mode;
Fig. 4 presents a functional block diagram of an optical protection module according to an embodiment of the invention.
Figs. 5A and 5B illustrate a configuration of an input optical switch and an output optical switch, respectively; and
Fig. 6 presents a flow chart describing a sequence of events occurring when a protection action is required according to the embodiment illustrated in Figs. 5.

### Detailed Description of the Invention

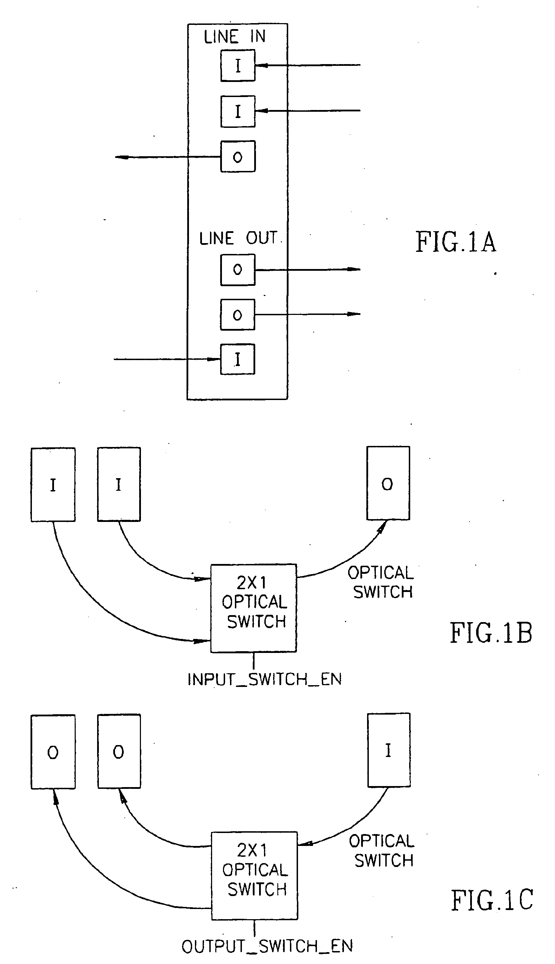

Reference is now made to Fig. 1, which illustrates schematically a preferred embodiment of a wave division multiplexing communications system constructed and operative in accordance with a preferred embodiment of the present invention.

The following example describes an Optical Protection Module (to be referred to hereinafter as "OPM") in accordance with the present invention. One of the main purposes of having such an OPM is to perform line protection and 10 protection at the optical level, similarly to the SDH MSP 1+1 and IOP protections.

The OPM unit can be separated or an add-on unit to the LOS Detection unit. In the latter case, the need for additional LOS detection mechanisms and electrical control components is eliminated.

Typically, the OPM occupies a single CCP slot, forming together with the LOS Detection unit a double slot unit. The OPM unit includes two sets of fiber connectors, each containing 3 fibers. The first set includes 2 fiber inputs and 1 output, while the second set includes 1 fiber input and 2 outputs. Over all, the OPM unit receives 4 fiber from the line direction and 2 fibers from the LOS detection unit direction. Fig. 1A presents OPM card configuration.

The first set of optical fiber interfaces contains two fiber connectors for two fibers coming from the line direction (one operative and the other for protection), and one output fiber towards the LOS Detection unit card. The two input fibers are connected to a 2x1 optical switch, which alternately can connect each one of the input fibers to the output fibers.

Fig. 1B depicts the connection between the 2 input and one output fibers.

Similarly, the two output fibers of the second set of fiber interfaces are connected to another 2x1 optical switch, which can alternately connect each one of them to the single output fiber. Fig. 1C depicts the connection between the two output and one input fibers.

LOS detection is not required within the OPM unit itself, since the LOS Detection unit can perform the LOS detection operation. This way, the OPM card includes only the two optical switches, and no additional hardware is required.

The use of two optical switches, instead of an optical switch and an optical splitter is intended to avoid the power loss of 3-4 dB, in case the optical signal is splitted between the operative and protective fibers. As will be further shown, although switches are used at both ends, the protection mechanism can operate without exchanging information between the two ends of the network (such as an APS algorithm).

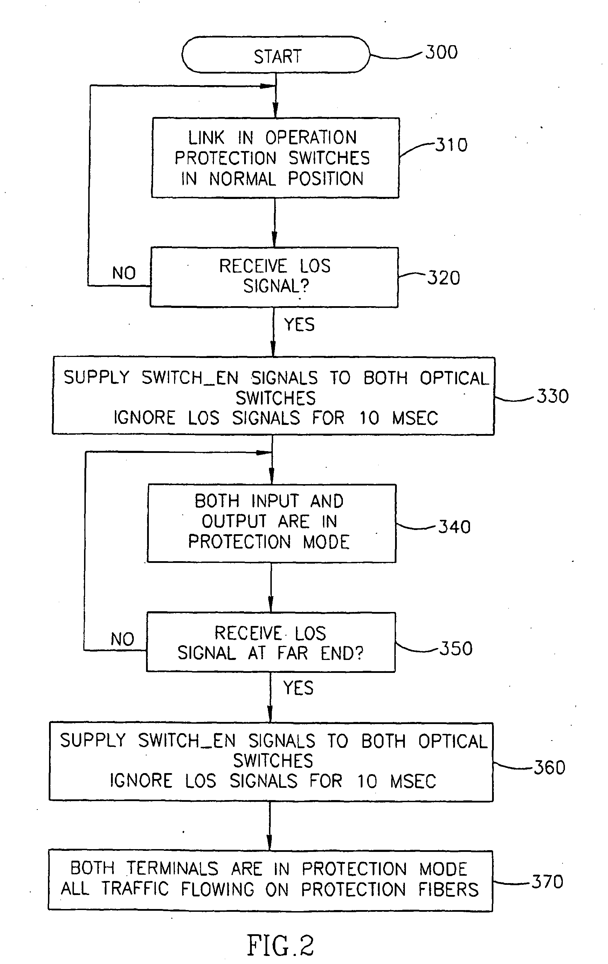

Fig. 2 demonstrates a flow chart of a sequence of events taking place when a link failure occurs and a protective action is required.

Since the required LOS detection time is less than 1 msec, and the optical switch switching time should be under 4 msec, the whole protection procedure could be completed under 10 msec.

As previously explained, one type of optical protection is OMS/OTS layer protection. According to such type of protection, a set of multiplexed signals is protected between two adjacent optical network elements ("NE"). The protection procedure is somewhat similar so other ring protections known in the art, e.g. in SDH networks, but is carried out at the optical layer.

Another type of protection is the Och layer protection. The Och protection is provided for individual channels (wavelengths). In this case, separate channels are transmitted either on the operative or the protection fibers. Consequently, two different transponders may be required per channel. Contrary to the previous type of protection discussed, this type of protection is preferably carried out at the add and drop direction and not in the optical ring direction.

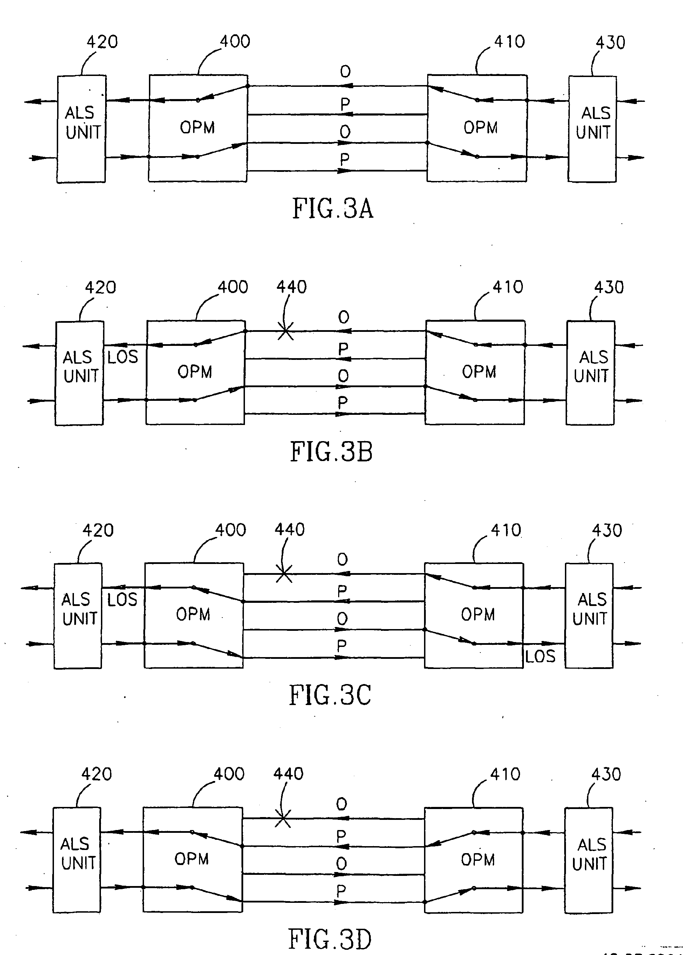

The following figures 3A to 3D present the system operation scheme in normal operating mode as well as in the protection mode.

Fig. 3A presents the system in normal operation mode. The four fibers, two operative and two protection fibers are connected at both ends to OPM units **400** and **410,** respectively, which in turn are connected to LOS Detection units **420** and **430,** respectively.

Fig. 3B illustrates the stage that a fiber break occurs in the point designated as **440.** The fiber LOS is detected by the LOS Detection unit **420,** which performs automatic shut down procedure. Once the shut down procedure is initiated, OPM **400** switches to protection mode as illustrated in Fig. 3C. Such a switch triggers a LOS in LOS Detection unit **430,** and once this LOS is detected, OPM **410** will switch too to a protection mode (Fig. 3D), completing the system's required switch to the protection mode.

Following the second protection switching, all traffic is transmitted via the protection fibers. The entire operation is typically completed in less than 10 msec, and thus the LOS detection mechanism will not be triggered (an operation that typically requires about 500 msec). The protection fibers are now connected to LOS Detection unit and therefore if a fiber break occur on one of the protection fibers, LOS detection will be triggered and will cause a shutdown of all traffic.

The OPM unit according to the present Example comprises of the following main components:
□ 6 SC fiber connectors, 3 inputs and 3 outputs.
□ 2 2x1 optical switches.
□ DC Power supply.

No additional components are required in this Example since all the control circuitry is included in the LOS Detection unit.

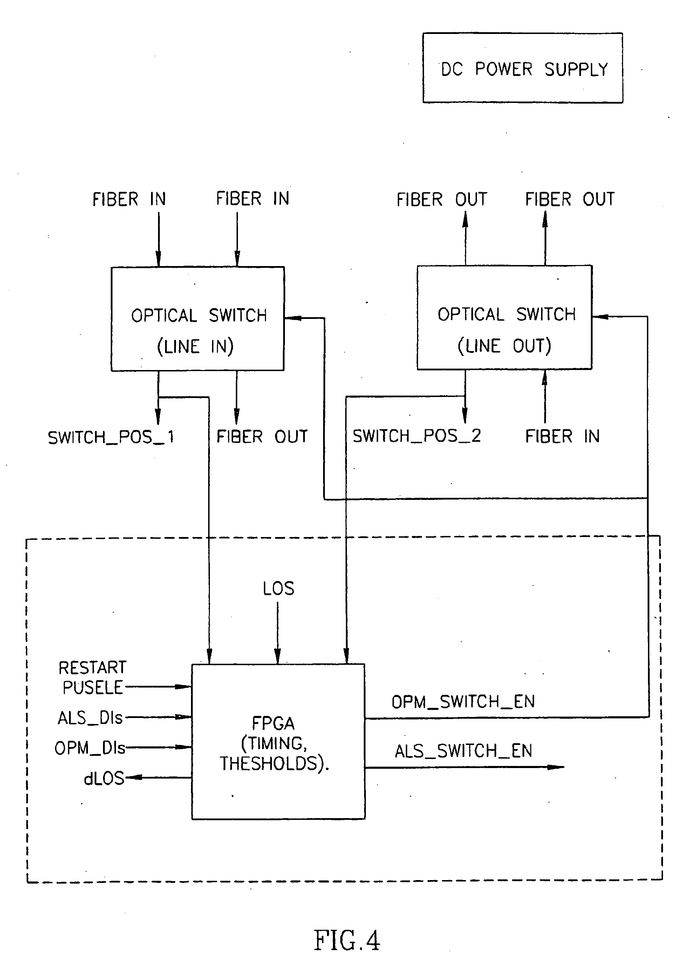

Fig. 4 presents a functional block diagram of the OPM unit. The figure presents the main functional blocks and their inter-relations, and should not be interpreted as a detailed and exact hardware layout.

As mentioned previously, LOS detection will be provided by the LOS Detection unit, through the control FPGA, which will be used for controlling the optical switched onboard the OPM card.

In order to control the OPM unit, additional outputs are required from FPGA onboard the LOS detection card. Therefore the FPGA is incorporated once again, including the additional signal.

Two main additional outputs are required - OPM_Switch_En and OPM switch position. The OPM_Switch_En signal controls the two optical switches and should change its value from 0 to 1 or from 1 to 0 upon LOS detection. As mentioned previously, the signal should be kept fixed for 10 msec, although LOS is still being detected, in order to enable completion of the protection action.

The following table 2 lists some relevant technical specification of the OPM unit.

| **Component** | **Parameter** | **Value** | **Units** | **Remarks** |
|---|---|---|---|---|
| *Optical Switch Unit* | Insertion Loss | <0.5 | dB | |
| | Switching Time | <4 | msec | |
| | Switch_Pos | 0 - Switch in Normal Position 1 - Switch in Protect Position | | |
| *FPGA* | OPM_Switch_En Hold off time. | 10 | msec | Ignore LOS detection until completion of protection action. |

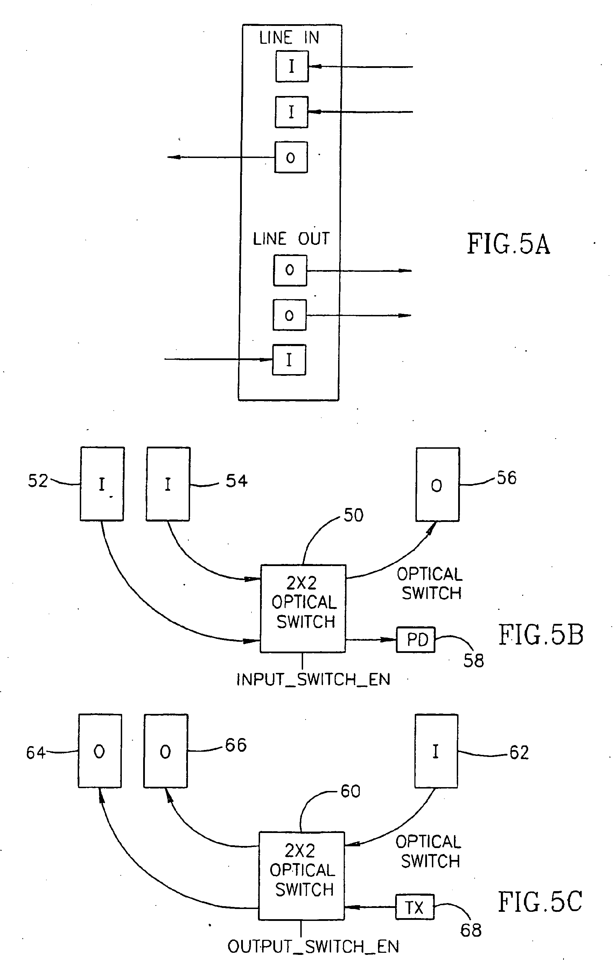

Another embodiment of the present invention is illustrated in Figs. 5A and 5B. By this embodiment an input 2X2 optical switch 50 allows the connectivity of two incoming optical fibers 52 and 54 (one of which being the operative fiber and the other the protection fiber), to an outgoing optical fiber 56 and a photo-diode 58. The input fiber that is currently not connected to the outgoing fiber, is connected to a further receiver (photo-diode 58) for monitoring the fiber operability. Similarly, another 2X2 optical switch 60 is demonstrated in Fig. 5B, for use as an output switch. This switch allows the connectivity of one input optical fiber 62 to any one of the outgoing optical fibers 64 and 66. The outgoing fiber that is not currently connected to the incoming fiber is connected to transmitter 68. Preferably, low cost transmitter 68 and receiver 58 are used, and provide continuous monitoring of the fiber that is not used for traffic transmission. As was previously explained, such monitoring can be done either continuously, e.g. by transmitting low rate signals, or every pre-defined period of time. While operating, photo-diode 58 provides a monitor LOS signal, which is used to notify a detection of LOS of the optical fiber not currently used for transmission of traffic. According to still another preferred embodiment, no additional receiver is used, and the differentiation between real traffic and monitoring signals is done by their characteristics, e.g. change of power, rate, bandwidth and the like.

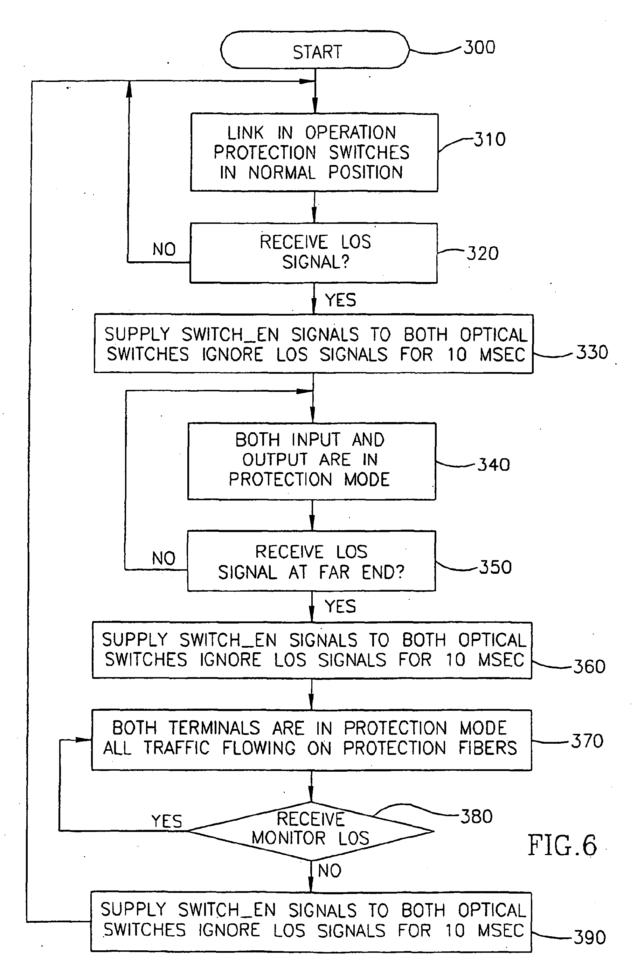

Fig. 6 which is an embodiment of the flow chart presented in Fig. 2, demonstrates a flow chart of a sequence of events taking place when a link failure occurs and a protective action is required, in the case where a monitoring of the non-used channel is carried out.

It will be appreciated that the above-described methods may be varied in many ways, including but not limited to, changing the exact implementation used. It should also be appreciated that the above described description of methods and networks are to be interpreted as including network in which the methods are carried out and methods of using the network components.

The present invention has been described using non-limiting detailed descriptions of preferred embodiments thereof that are provided by way of example and are not intended to limit the scope of the invention. It should be understood that features described with respect to one embodiment may be used with other embodiments and that not all embodiments of the invention have all the features shown in a particular figure.
Variations of embodiments described will occur to persons of the art. Furthermore, the terms "comprise", "include", "have" and their conjugates shall mean, when used in the claims "including but not necessarily limited to".

## Claims

1. A method for diverting communication traffic in an optical transport network which comprises at least one first optical transmission link and at least one first optical reception link extending between a first and a second locations and carrying traffic in normal operation mode between the first location and the second location, and at least one second transmission link and at least one second reception link adapted to carry traffic diverted from at least one of the first optical transmission and reception links in the event of a fault in at least one of the links selected from the group consisting of the first optical transmission link and the first optical reception link, which method comprises the steps of:
detecting a fault on said at least one first optical reception link at the second location by determining whether a total of the energy received over the at least one first optical reception link at the second location exceeds a pre-defined threshold;
in the case that the total energy thus received does not exceed the pre-defined threshold, diverting the traffic transmission and reception at the second location to at least one of the corresponding second links;
detecting a fault on at least one first optical reception link at the first location by determining whether a total of the energy received via the at least one first optical reception link at the first location exceeds a pre-defined threshold; and
in the case that the total energy thus received at the first location does not exceed the pre-defined threshold, diverting the traffic transmission and reception at the first location to at least one of the corresponding second links.

2. A method according to Claim 1, wherein said at least one second transmission link and at least one second reception link are used for protecting at least one pre-designated channel out of a plurality of telecommunication channels.

3. A method according to Claim 1, wherein said at least one second transmission link and at least one second reception link are used for protecting a plurality of telecommunication channels.

4. An optical communication system comprising [a] a plurality of telecommunication channels extending between first and second locations, the channels comprising a plurality of forward channels for carrying traffic, in normal operating mode from the first location to the second location, [b] at least one protection link for carrying the traffic of at least one of said forward channels in the event of fault in said at least one forward channel, and [c] diverting means being able in response to a detection of loss of signal in said at least one forward channel, to divert traffic designated to be transmitted along said at least one forward channel to said at least one protection link at each of the first and second locations, independent of detecting a loss of signal at the other of said first and second location.

5. An optical communication system according to Claim 4, further comprising means adapted to monitor the operability of the protection link during normal operation mode of the system.

6. A method according to Claim 1, further comprising monitoring the operability of the protection link defined by said second transmission link and said second reception link, when said protection link is not used for transmission of traffic during normal operation mode.

## Patentansprüche

1. In einem optischen Transportnetz, umfassend wenigstens eine erste optische Sendeverbindung und wenigstens eine erste optische Empfangsverbindung, die zwischen einem ersten und einem zweiten Ort verläuft und Verkehr im Normalbetriebsmodus zwischen dem ersten Ort und dem zweiten Ort führt, und weingstens eine zweite Sendeverbindung und weingstens eine zweite Empfangsverbindung, die so gestaltet sind, dass sie Verkehr führen, der von weingstens einer der ersten optischen Sende- und Empfangsverbindungen im Falle eines Ausfalls von wenigstens einer der Verbindungen ausgewählt aus der Gruppe bestehend aus der ersten optischen Sendeverbindung und der ersten optischen Empfangsverbindung umgeleitet wird, ein Verfahren zum Umleiten von Verkehr, wobei das Verfahren die folgenden Schritte umfasst:
Erkennen einer Störung auf der gennanten wenigstens einer ersten optischen Empfangsverbindung an dem zweiten Ort durch das Bestimmen, ob ein Gesamtwert der über die wenigstens eine erste optische Empfangsverbindung am zweiten Ort empfangenen Energie einen vorbestimmten Schwellenwert überschreitet;
in dem Fall, dass die so empfangene Gesamtenergie den vorbestimmten Schwellenwert nicht überschreitet, Umleiten des Sendens und Empfangens von Verkehr an dem zweiten Ort auf wenigstens eines der entsprechenden zweiten Verbindungen;
Erkennen einer Störung auf wenigstens einer ersten optischen Empfangsverbindung an dem ersten Ort durch das Bestimmen, ob ein Gesamtwert der über die wenigstens eine erste optische Empfangsverbindung am ersten Ort empfangenen Energie einen vordefinierten Schwellenwert überschreitet; und
in dem Fall, dass die am ersten Ort so empfangene Gesamtenergie den vordefinierten Schwellenwert nicht überschreitet, Umleiten des Sendens und Empfangens von Vekehr am ersten Ort auf wenigstens eines der entsprechenden zweiten Verbindungen.

2. Verfahren nach Anspruch 1, bei dem die genannte wenigstens eine zweite Sendeverbindung und wenigstens eine zweite Empfangsverbindung zum Schützen von wenigsten einem vorbestimmten Kanal aus einer Mehrzahl von Telekommunikationskanälen verwendet wird.

3. Verfahren nach Anspruch 1, bei dem die genannte wenigstens eine zweite Sendeverbindung und wenigstens eine zweite Empfangsverbindung zum Schützen einer Mehrzahl von Telekommunikationskanälen verwendet wird.

4. Optisches Kommunikationssystem, umfassend [a] eine Mehrzahl von Telekommunikationskanälen, die zwischen einem ersten und einem zweiten Ort verlaufen, wobei die Kanäle eine Mehrzahl von Hauptkanälen zum Führen von Verkehr im Normalbetriebsmodus von dem ersten Ort zu dem zweiten Ort umfassen, [b] wenigstens eine Schutzverbindung zum Führen des Verkehrs von wenigstens einem Hauptkanal in dem Fall einer Störung in dem wenigstens einen Hauptkanal und [c] Umleitmittel, die dazu in der Lage sind, in Antwort auf ein Erkennen eines Signalverlusts in dem wenigstens einen Hauptkanal Verkehr, der dazu bestimmt ist, entlang des wenigstens einen Hauptkanals gesendet zu werden, zu der wenigstens einen Schutzverbindung an sowohl dem ersten als auch dem zweiten Ort umzuleiten, unabhängig von einem Erkennen eines Signalverlusts an dem anderen ersten oder zweiten Ort.

5. Optisches Kommunikationssystem nach Anspruch 4, ferner umfassend Mittel zum Überwachen der Betriebsfähigkeit der Schutzverbindung während des Normalbetriebsmodus des Systems.

6. Verfahren nach Anspruch 1, ferner umfassend das Überwachen der Betriebsfähigkeit der Schutzverbindung, die durch die zweite Sendeverbindung und die zweite Empfangsverbindung definiert ist, wenn die genannte Schutzverbindung nicht zum Senden von Verkehr während des Normalbetriebsmodus verwendet wird.

## Revendications

1. Une méthode pour dévier le trafic des communications d'un réseau à transport optique comprenant, au moins, une première liaison d'émission optique et, au moins, une première liaison de réception optique reliant un premier endroit à un deuxième endroit et acheminant le trafic, en mode d'exploitation normal, entre le premier endroit et le deuxième endroit, et, au moins, une deuxième liaison d'émission et, au moins, une deuxième liaison de réception adaptées pour acheminer le trafic dévié d'au moins une première liaison d'émission et de réception optique en cas de défaillance dans au moins l'une des liaisons choisies dans le groupe de la première liaison d'émission et de réception optiques. Cette méthode comprend les étapes suivantes:
détection d'une défaillance sur ladite au moins une première liaison de réception au deuxième endroit en déterminant si l'énergie totale reçue par au moins une première liaison de réception optique, au deuxième endroit, dépasse un seuil prédéfini;
au cas où l'énergie totale ainsi reçue ne dépasse pas le seuil prédéfini, déviation de l'émission et réception du trafic au deuxième endroit vers au moins une des deuxièmes liaisons correspondantes;
détection d'une défaillance sur au moins une première liaison de réception au premier endroit en déterminant si l'énergie totale reçue par au moins une première liaison de réception optique, au premier endroit, ne dépasse pas le seuil prédéfini; et
au cas où l'énergie totale ainsi reçue au premier endroit ne dépasse pas le seuil prédéfini, déviation de l'émission et réception du trafic au premier endroit vers au moins une des deuxièmes liaisons correspondantes.

2. Une méthode selon la Revendication 1, suivant laquelle ladite au moins une deuxième liaison d'émission et au moins une deuxième liaison de réception sont utilisées pour protéger au moins une voie désignée à l'avance parmi maintes voies de télécommunications.

3. Une méthode selon la Revendication 1, suivant laquelle ladite au moins une deuxième liaison d'émission et au moins une deuxième liaison de réception sont utilisées pour protéger maintes voies de télécommunications.

4. Un système de communications optiques comprenant [a] maintes voies de télécommunications reliant un premier endroit à un deuxième endroit, les voies comprenant maintes voies aller pour acheminer le trafic, en mode d'exploitation normal, du premier endroit au deuxième endroit, [b] au moins une liaison de protection pour acheminer le trafic d'au moins une voie aller en cas de défaillance dans ladite au moins une voie aller, et [c] des moyens de déviation étant capables, comme réponse à la détection d'une perte du signal dans ladite au moins une voie aller, de dévier le trafic désigné à être transmis par ladite au moins une voie aller à ladite au moins une liaison de protection, à chacun des premier et deuxième endroits, indépendants de la détection d'une perte de signal audits autres premier et deuxième endroits.

5. Un système de communications optiques selon la Revendication 4 comprenant, en outre, des moyens adaptés pour contrôler l'exploitabilité de la liaison de protection en mode d'exploitation normale du système.

6. Une méthode selon la Revendication 1, comprenant, en outre, un contrôle de l'exploitabilité de la liaison de protection définie par ladite deuxième liaison d'émission et ladite deuxième liaison de réception lorsque ladite liaison de protection n'est pas utilisée pour transmettre le trafic en mode d'exploitation normal.
